# FASCICULE DE BREVET EUROPEEN

(11) **EP 1 966 581 B1**
(45) Date de publication et mention de la délivrance du brevet: **26.10.2016**
(21) Numéro de dépôt: 06842177.5
(22) Date de dépôt: 15.12.2006
(51) Int. Cl.: G01M 11/00

(54) **PROCEDE DE MESURE DU RETARD DE GROUPE DIFFERENTIEL D'UNE LIAISON PAR FIBRE OPTIQUE**
VERFAHREN ZUM MESSEN DER DIFFERENTIALGRUPPENVERZÖGERUNG EINER OPTISCHEN VERKNÜPFUNG
METHOD FOR MEASURING DIFFERENTIAL GROUP DELAY OF AN OPTICAL LINK

(30) Priorité: 28.12.2005 FR 0554121
(43) Date de publication de la demande: 10.09.2008
(73) Titulaire: Orange, 75015 Paris (FR)
(72) Inventeur: HUI BON HOA, Daniel, F-22300 Lannion (FR); GAVIGNET, Paulette, F-22730 Tregastel (FR); DOURTHE, Christian, F-22300 Lannion (FR)
(86) Numéro de dépôt international: PCT/FR2006/051368
(87) Numéro de publication internationale: WO 2007/074277

(56) Documents cités:
- US-A1- 2003 117 612
- BENLACHTAR M SCOPES R I KILLEY P BAYVEL Y: "Novel Eye Monitoring Technique for Detection of First Order PMD" QUANTUM ELECTRONICS AND LASER SCIENCE, 2005 CONFERENCE BALTIMORE, MD, USA 22-27 MAY 2005, PISCATAWAY, NJ, USA,IEEE, 22 mai 2005 (2005-05-22), pages 1789-1791, XP010887833 ISBN: 1-55752-796-2
- WANG JIAN ET AL: "Experiments of PMD compensation using electrical feedback signals for a 10 Gbit/s system" PROCEEDINGS OF SPIE -- VOLUME 5281 -- OPTICAL TRANSMISSION, SWITCHING, AND SUBSYSTEMS, CEDRIC F. LAM, CHONGCHENG FAN, NORBERT HANIK, KIMIO OGUCHI, EDITORS, vol. 5281, mai 2005 (2005-05), pages 309-313, XP002405988 ISSN: 1004-4213

## Description

La présente invention concerne un procédé de mesure du retard de groupe différentiel dans une liaison par fibre optique.

L'invention trouve une application avantageuse dans le domaine général de la métrologie des fibres optiques, et plus particulièrement dans celui de la qualification d'une liaison par fibre optique pour la recette de systèmes de transmission optique à haut débit et longue distance.

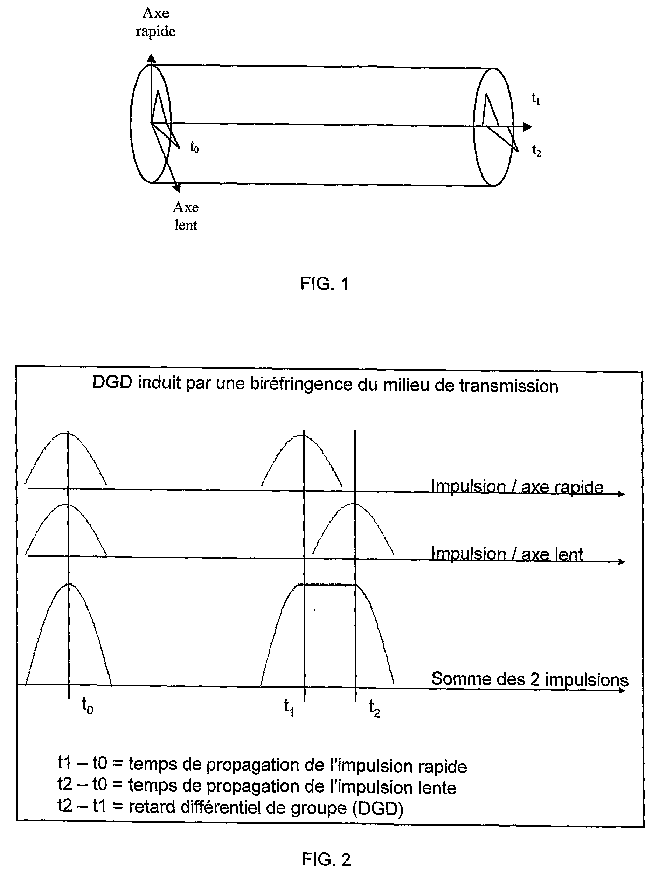

Dans un système de transmission sur fibre optique, la liaison, incluant les sections de fibres de ligne et de fibre de compensation de dispersion chromatique, les connecteurs, les multiplexeurs-démultiplexeurs, ainsi que les coupleurs, filtres, isolateurs, circulateurs, amplificateurs, etc., se comporte comme un milieu biréfringent et induit des effets néfastes pour la propagation du signal qui se traduisent notamment par une variation du temps de groupe dépendant de l'angle de la polarisation des signaux optiques transmis par rapport aux axes rapide et lent de biréfringence locale, tels que représentés sur la figure 1. En d'autres termes, comme le montre la figure 2, il apparaît une différence des temps de propagation, appelé retard de groupe différentiel DGD (« Differential Group Delay »), entre des signaux polarisés selon les axes rapide et lent. Ce retard t₂-t₁, que l'on notera τ₁, dépend du nombre d'éléments biréfringents traversés et de la longueur d'onde utilisée.

Ainsi qu'on peut le voir également sur la figure 2, cette dispersion du temps de propagation a pour conséquence d'élargir les impulsions lumineuses résultantes transmises le long de la liaison optique et doit être maintenue dans une plage de tolérance spécifiée par une valeur DGDmax déterminée en fonction du débit, du codage et du format de modulation du signal. Ce DGDmax doit être inférieur à 1/D, D étant le débit en bit/s des impulsions optiques transmises par la liaison.

Le DGD est essentiellement une grandeur instantanée car elle dépend de nombreux facteurs physiques susceptibles de varier avec le temps, tels que la température, les contraintes locales appliquées, etc.

Par ailleurs, la dispersion totale due à la polarisation de la lumière et à la biréfringence du milieu peut être aussi caractérisée par une autre grandeur appelée PMD (« Polarisation Mode Dispersion ») qui prend en compte une moyenne des DGD pour tous les états de polarisation et pour tout le spectre optique transmis par la fibre pendant la durée de la mesure de PMD. En effet, il a été démontré que les différentes valeurs de DGD obtenues dans une grande plage spectrale sur une courte durée, de quelques minutes par exemple, correspondent aux valeurs que peut prendre le DGD à une longueur d'onde donnée sur une grande période de temps de l'ordre de plusieurs jours par exemple. Cette mesure à large bande optique peut être réalisée si et seulement si une plage spectrale significative est explorée et, par conséquent, la plage spectrale que permet de couvrir la bande passante d'un canal des systèmes WDM (« Wavelength Division Multiplexing »), fixée par les multiplexeurs-démultiplexeurs optiques des terminaux ou des OADM (Optical Add Drop Multiplexer), s'avère trop faible pour réaliser cette mesure.

Il est possible, de manière connue, d'estimer une valeur maximale DGDmax du retard de groupe différentiel à partir de la mesure de PMD en calculant une probabilité de dépassement d'une valeur de DGD en fonction d'un modèle statistique de distribution des DGD comme la distribution de MAXWELL telle qu'aujourd'hui normalisée.

Une méthode connue de mesure de la PMD sur une liaison par fibre optique consiste à mesurer la PMD sur les sections de fibre de la liaison au moyen d'une source optique à large bande ou accordable sur une large bande, de plusieurs dizaines de nanomètres par exemple. On peut, dans ce but, utiliser toute la bande passante optique d'une liaison WDM. Un contrôleur de polarisation permet de simuler tous les états de polarisation du signal à l'entrée des sections de fibre. En sortie des sections, un second contrôleur permet d'analyser tous les états de polarisation du signal reçu. La valeur de PMD est estimée à partir des interférogrammes du signal reçu ou d'une analyse des états de polarisation, mettant en oeuvre la matrice de JONES, les paramètres de STOKES ou la sphère de POINCARE, pour chaque longueur d'onde et chaque état de polarisation analysé. Un traitement probabiliste couvrant tous les états de polarisation et toutes les longueurs d'onde donne une estimation de la valeur de PMD et, de là, une estimation du DGDmax en appliquant le modèle statistique mentionné plus haut.

Ce procédé connu d'estimation du DGD présente cependant un certain nombre d'inconvénients. D'une part, il ne permet pas d'obtenir une valeur instantanée du DGD, ce qui est primordial lorsque l'on veut qualifier une liaison à l'occasion d'une recette. D'autre part, il constitue une méthode intrusive entraînant une interruption du trafic car elle nécessite une coupure de la ligne optique pour insérer les appareils de mesure. Enfin, seuls les sections de fibre optique sont prises en compte et non l'ensemble des éléments de la liaison, incluant en particulier les terminaux et les OADM.

En outre, dans l'état de la technique, on notera la publication de Benlachtar et al intitulée "Novel Eye Monitoring Technique for Détection of First Order PMD", pages 1789-1791, publiée en mai 2005, qui divulgue un procédé d'évaluation du DGD à partir du diagramme de l'oeil.

Aussi, le problème technique à résoudre par l'objet de la présente invention est de proposer un procédé de mesure du retard de groupe différentiel τ₁ dans une liaison par fibre optique, qui permettrait de fournir une valeur instantanée du DGD total de la liaison à une longueur d'onde donnée, même en présence d'OADM, au moins valable pendant la durée de la mesure, et qui pourrait être mis en oeuvre sans rupture de trafic sur les autres longueurs d'onde.

La solution au problème technique posé consiste, selon la présente invention, en ce que ledit procédé comprend les étapes consistant :
- à l'entrée de ladite liaison, à générer une séquence de signal optique binaire à un débit D, et à appliquer audit signal binaire un premier balayage des états de polarisation,
- en sortie de liaison, à appliquer au signal binaire de la séquence sortante un second balayage des états de polarisation, indépendamment du premier balayage, à introduire un retard de groupe différentiel additionnel τ₂ connu, à faire varier ledit retard de groupe différentiel additionnel jusqu'à déterminer l'égalité τ₁+τ₂=1/D sur la séquence de signal optique résultant, et à en déduire le retard de groupe différentiel τ₁ cherché.

Ainsi, connaissant à chaque instant la valeur τ₂ du retard additionnel introduit ainsi que la valeur D du débit en bit/s, on en déduit immédiatement la valeur instantanée τ₁ du DGD.

D'autre part, on verra plus loin que le procédé conforme à l'invention peut être appliqué très simplement, par exemple sur une liaison WDM, sans aucune interruption de trafic, en utilisant une longueur d'onde disponible entre le terminal émetteur et le terminal récepteur, c'est-à-dire sur la liaison dans son ensemble de terminal à terminal et non sur des sections de fibre de ligne.

Selon un premier mode de réalisation, l'étape de déterminer l'égalité τᵢ+τ₂=1/D, avec τ₁ et τ₂ inférieurs à 1/D et leur somme au plus égale à 1/D, est effectuée en enregistrant un diagramme de l'oeil de la séquence de signal résultant de la combinaison des composantes rapide et lente du signal optique transmis, ladite égalité étant réalisée lorsque ledit diagramme présente un signal résultant à trois niveaux et une intensité maximale du niveau central.

Selon un deuxième mode de réalisation, l'étape de déterminer l'égalité τ₁+τ₂=1/D est effectuée en enregistrant un histogramme des niveaux de signal du diagramme de l'oeil , ladite égalité étant réalisée lorsque ledit histogramme présente une distribution à 3 lobes et que l'amplitude du lobe central atteint une valeur maximale.

L'invention concerne également un dispositif de mesure du retard de groupe différentiel τ₁ dans une liaison par fibre optique, remarquable en ce que ledit dispositif comprend :
- à l'entrée de ladite liaison, un générateur de séquences de signal binaire à un débit D et un premier contrôleur de polarisation apte à effectuer un premier balayage des états de polarisation appliquée au signal binaire entrant,
- en sortie de liaison, un second contrôleur de polarisation apte à effectuer un second balayage des états de polarisation appliquée au signal résultant de la combinaison des composantes rapide et lente du signal optique transmis par la liaison, indépendamment dudit premier balayage de polarisation, un émulateur de retard de groupe différentiel apte à introduire un retard de groupe différentiel additionnel τ₂ variable, et un dispositif d'analyse apte à déterminer l'égalité τ₁+τ₂=1/D sur la séquence du signal résultant reçu après l'émulateur de retard de groupe différentiel.

Selon le premier et le deuxième modes de réalisation, ledit dispositif d'analyse est un oscilloscope équipé d'une tête de réception optique permettant d'enregistrer un diagramme de l'oeil du signal résultant reçu et de générer un histogramme des niveaux de signal, en particulier de fournir l'amplitude du niveau central d'une séquence de signal résultant qui passe progressivement de deux à trois niveaux quand on augmente le retard de groupe différentiel additionnel τ₂.

Enfin, l'invention prévoit que, ladite liaison étant une liaison WDM, ledit générateur de séquences de signal binaire et ledit premier contrôleur de polarisation sont disposés sur un canal d'entrée de ladite liaison, et que ledit second contrôleur de polarisation, ledit émulateur de retard de groupe différentiel et ledit dispositif d'analyse sont disposés sur le canal de sortie de la liaison associé audit canal d'entrée.

La description qui va suivre en regard des dessins annexés, donnés à titre d'exemples non limitatifs, fera bien comprendre en quoi consiste l'invention et comment elle peut être réalisée.
La figure 1 est un schéma représentant une fibre optique biréfringente et les axes principaux de polarisation associés.
La figure 2 montre des chronogrammes de propagation des composantes d'une impulsion optique pour des polarisations parallèles à chaque axe principal de polarisation de la fibre optique de la figure 1 et du signal somme résultant après propagation dans la fibre et montrant un élargissement de l'impulsion.
La figure 3 est un schéma d'un dispositif pour la mise en oeuvre du procédé conforme à l'invention.
La figure 4 représente un écran d'oscilloscope montrant un diagramme de l'oeil d'une séquence de signal à trois niveaux résultant du procédé conforme à l'invention ainsi qu'un histogramme à 3 lobes des niveaux obtenus, cet histogramme étant incrusté verticalement sur le côté gauche de la figure 4.
La figure 5 représente un chronogramme (a) d'une séquence de signal binaire se propageant selon l'axe rapide de la liaison, un chronogramme (b) de la même séquence de signal binaire se propageant selon l'axe lent et retardée de 1/D, et un chronogramme (c) de la somme des deux chronogrammes précédents présentant bien les 3 niveaux du signal résultant.

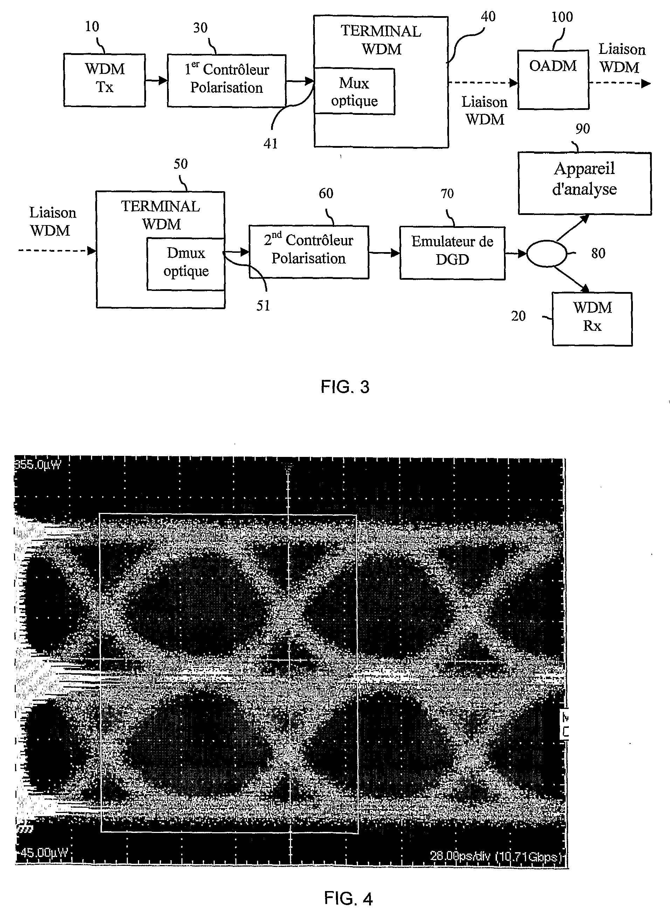

Sur la figure 3 est représenté un dispositif de mesure du retard de groupe différentiel d'une liaison par fibre optique dans le cas d'un multiplexage WDM. Ce retard, noté τ₁, correspond à la différence t₂-t₁ indiqué sur la figure 2.

Ce dispositif peut utiliser les transpondeurs et les multiplexeurs-démultiplexeurs du système de transmission WDM existant pour la génération et la détection d'une séquence de signal binaire servant de signal de test pour la mesure de DGD. On appellera D le débit de cette séquence. Typiquement, D est de l'ordre de 10 Gbit/s dans l'expérience réalisée pour valider l'invention.

La source 10 générant la séquence de test est un transmetteur du système WDM. Le récepteur 20 correspondant à la source 10 est utilisé pour mesurer le taux d'erreur binaire de transmission à l'autre extrémité de la liaison en fonction des états de polarisation et du DGD total τ₁+τ₂. La source 10 est accordée à la longueur d'onde d'un port d'entrée du multiplexeur optique 41 du terminal 40 auquel elle est reliée.

Le dispositif de la figure 3 utilise un premier contrôleur 30 de polarisation placé entre la source 10 et l'entrée du multiplexeur optique 41, et destiné à effectuer un premier balayage sur tous les états de polarisation appliqués au signal binaire d'une séquence de test entrant dans le multiplexeur 41.

A l'autre extrémité de la liaison, le démultiplexeur optique 51 dans le terminal de ligne 50 fournit la séquence transmise par la liaison. En ne considérant que le problème lié à la biréfringence des éléments optiques traversés, la liaison se comporte comme un milieu présentant deux axes principaux de polarisation, comme représenté sur la figure 1. Un second contrôleur 60 de polarisation placé à la sortie du démultiplexeur optique 51 effectue de la même manière un second balayage de tous les états de polarisation appliqués au signal de la séquence de test en sortie du démultiplexeur 51. Ce second balayage de polarisation est effectué indépendamment de celui fourni par le premier contrôleur 30 de polarisation.

De plus, un émulateur 70 de retard de groupe différentiel relie la sortie du second contrôleur 60 de polarisation à un coupleur optique 80 permettant d'envoyer une partie du signal vers un dispositif 90 d'analyse. L'émulateur 70 introduit un DGD additionnel variable τ₂ entre ses deux axes principaux de polarisation, qui vient s'ajouter au DGD τ₁ cherché lorsque la composante rapide du signal à l'entrée de l'émulateur coïncide avec son axe rapide de biréfringence. L'émulateur 70 de DGD crée en fait une biréfringence artificielle en introduisant un retard supplémentaire sur l'une des polarisations, puis en recombinant les deux polarisations.

La liaison WDM peut comporter un ou plusieurs OADM 100 entre les terminaux 40 et 50 ; les OADM sont transparents à la longueur d'onde de mesure.

D'une manière générale, le dispositif 90 d'analyse a pour but d'établir l'égalité τ₁+τ2=1/D à partir de la séquence de signal résultant sortant de l'émulateur 70 de DGD. Lorsque l'égalité précédente est réalisée pour une valeur de τ₂ donnée, on en déduit immédiatement τ₁, D étant connue par ailleurs comme le débit fixe du transmetteur du système WDM.

Selon un mode de réalisation particulier, le dispositif 90 d'analyse est constitué par un oscilloscope numérique à échantillonnage recevant un signal sortant du coupleur 80. Cet oscilloscope sert à visualiser le diagramme de l'oeil correspondant, lequel résulte de la superposition dans une même fenêtre temporelle de tous les échantillons de signal reçus, ainsi qu'à.fournir un histogramme des niveaux de signal reçu.

Le principe du procédé de mesure du DGD repose sur l'examen de l'évolution du diagramme de l'oeil et de l'histogramme enregistré au cours des variations des états de polarisation des signaux produites par les 2 contrôleurs de polarisation et par l'émulateur de retard de groupe différentiel.

En particulier, on peut observer qu'un diagramme de l'oeil à trois niveaux est obtenu après l'émulateur 70 si les conditions suivantes sont réunies:
- l'angle de la polarisation linéaire du signal à l'entrée du multiplexeur 41 est de 45° par rapport aux axes principaux de polarisation de la liaison,
- la polarisation du signal en sortie du démultiplexeur 51 est transformée en une polarisation linéaire orientée à 45 degrés par rapport aux axes principaux de polarisation de l'émulateur 70,
- La composante rapide du signal est alignée avec l'axe rapide de l'émulateur,
- la somme des retards τ₁ et τ₂ de la liaison et de l'émulateur est égale à la période 1/D des bits.

Dans ces conditions, on obtient le diagramme de l'oeil représenté sur la figure 4 qui fait apparaître un signal à trois niveaux avec un maximum de contraste du niveau central. Cette même figure montre verticalement sur la partie gauche un histogramme à 3 lobes représentant les 3 niveaux du diagramme qui, dans ces mêmes conditions, montre un lobe central d'amplitude maximale.

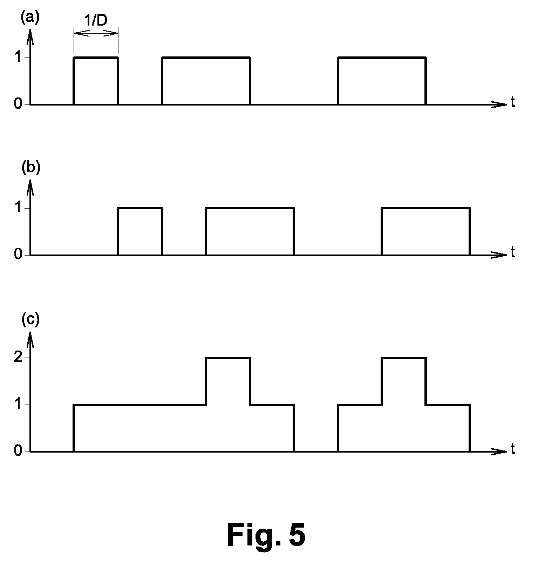

La figure 5 confirme la validité de ces 4 conditions en montrant un chronogramme (c) à trois niveaux obtenu lorsque la condition τ₁+τ₂=1/D est réalisée. Ce chronogramme résulte de la somme du chronogramme (a) d'une séquence selon l'axe rapide et du chronogramme (b) de la même séquence selon l'axe lent retardée de 1/D.

En pratique, la procédure de mesure consiste dans un premier temps à régler le premier contrôleur 30 avec un retard τ₂ de 0 picoseconde dans l'émulateur 70. On modifie l'état de polarisation à l'entrée du multiplexeur optique 41 tout en observant le diagramme de l'oeil à l'oscilloscope, jusqu'à ce qu'il soit le plus fermé possible.

Ensuite, on choisit une valeur de τ₂ différente de 0 et on règle le second contrôleur 60 pour obtenir un diagramme de l'oeil plus fermé que le précédent. Eventuellement, on reprend le réglage du premier contrôleur 30 pour minimiser l'ouverture du diagramme.

On augmente progressivement la valeur de τ₂ et, à chaque fois, on procède au réglage du second contrôleur 60 et éventuellement du premier contrôleur 30 jusqu'à l'observation d'un diagramme à trois niveaux comme on le voit sur la figure 4. L'histogramme des signaux présente alors trois lobes correspondant aux trois niveaux de signal: haut (2), central (1) et bas (0) comme sur le chronogramme (c) de la figure 5. Le but de la procédure d'optimisation est de maximiser la hauteur du lobe central de cet histogramme en réglant les deux contrôleurs et la valeur τ₂ de DGD de l'émulateur à partir d'une valeur initiale nulle de τ₂. La valeur de τ₂ est toujours inférieure ou au plus égale à 1/D. De même, la somme τ₁ + τ₂ est inférieure ou au plus égale à 1/D.

La valeur τ₁ de DGD de la liaison observable pendant la période de mesure est donc le complément à 1/D de la valeur de τ₂ DGD sélectionnée dans l'émulateur 70. Cette valeur de DGD peut évoluer suivant les conditions d'environnement, par exemple la température et les contraintes mécaniques exercées sur la fibre. On suppose qu'elle est constante pendant la mesure.

Simultanément, on peut relever sur le récepteur 20 les valeurs de taux d'erreur binaire de transmission et estimer ainsi la marge de fonctionnement en DGD du système.

Ainsi, le dispositif conforme à l'invention utilise des appareils de mesure et de métrologie optique et électrique d'usage courant, comme des contrôleurs de polarisation, un émulateur de DGD, un photo-récepteur adapté au débit D du signal, un oscilloscope numérique à échantillonnage, ainsi que les transmetteurs et récepteurs déjà présents dans le système WDM.

Par ailleurs, un seul canal de multiplexage optique est utilisé pour la détermination du DGD de la liaison, le trafic des autres canaux n'étant pas perturbé par la mesure.

Le procédé conforme à l'invention peut être employé à la mise en service de toute longueur d'onde pour qualifier le retard DGD de la liaison avant l'application du nouveau trafic.

A la place des transmetteurs et récepteurs du système WDM, on peut aussi utiliser un générateur/récepteur de test externe fonctionnant à une longueur d'onde libre du multiplexage optique. Ceci permet d'effectuer la mesure sans coupure de trafic. Comme cette longueur d'onde n'est pas celle des canaux en service, on ne peut pas en déduire les DGD de ces derniers. Cependant, en effectuant des mesures à plusieurs longueurs d'onde libres du multiplexage, on peut par interpolation estimer les valeurs de DGD des canaux en service si la courbe des variations du DGD en fonction de la longueur d'onde est continue et varie lentement avec la longueur d'onde.

La séquence de test, à bande optique étroite, peut traverser des filtres optiques et des OADM sans perturbation du procédé de mesure.

## Revendications

1. Procédé de mesure du retard de groupe différentiel τ₁ dans une liaison par fibre optique, **caractérisé en ce que** ledit procédé comprend les étapes consistant :
- à l'entrée de ladite liaison, à générer une séquence de signal binaire à un débit D, et à appliquer au dit signal binaire un premier balayage des états de polarisation,
- en sortie de liaison, à appliquer au signal binaire de la séquence sortante un second balayage des états de polarisation, indépendamment du dit premier balayage, à introduire un retard de groupe différentiel additionnel τ₂ connu, à faire varier ledit retard de groupe différentiel additionnel jusqu'à déterminer l'égalité τ₁+τ₂=1/D sur la séquence de signal résultant et à en déduire le retard de groupe différentiel τ₁ cherché.

2. Procédé selon la revendication 1, **caractérisé en ce que** l'étape de déterminer l'égalité τ₁+τ₂=1/D est effectuée en enregistrant un diagramme de l'oeil d'une séquence de signal résultant, ladite égalité étant réalisée lorsque ledit diagramme présente un signal à trois niveaux avec une intensité maximale du niveau central.

3. Procédé selon la revendication 1, **caractérisé en ce que** l'étape de déterminer l'égalité τ₁+τ₂=1/D est effectuée en enregistrant un histogramme des niveaux du diagramme de l'oeil du signal résultant, ladite égalité étant réalisée lorsque ledit histogramme présente 3 lobes et que le lobe central atteint une amplitude maximale.

4. Dispositif de mesure du retard de groupe différentiel τ₁ dans une liaison par fibre optique, **caractérisé en ce que** ledit dispositif comprend :
- à l'entrée de ladite liaison, un générateur (10) de séquence de signal binaire à un débit D et un premier contrôleur (30) de polarisation apte à effectuer un premier balayage des états de polarisation appliqués au signal binaire de la séquence entrante,
- en sortie de liaison, un second contrôleur (60) de polarisation apte à effectuer un second balayage des états de polarisation appliqués au signal de la séquence sortante indépendamment dudit premier balayage de polarisation, un émulateur (70) de retard de groupe différentiel apte à introduire un retard de groupe différentiel additionnel τ₂ variable, et un dispositif (90) d'analyse apte à déterminer l'égalité τ₁+τ₂=1/D sur la séquence de signal résultant après l'émulateur (70).

5. Dispositif selon la revendication 4, **caractérisé en ce que** ledit dispositif (90) d'analyse est un générateur d'histogramme apte à fournir l'histogramme des niveaux d'une séquence de signal résultant.

6. Dispositif selon l'une quelconque des revendications 4 et 5, **caractérisé en ce que**, ladite liaison étant une liaison WDM, ledit générateur (10) de séquences de signal et ledit premier contrôleur(30) de polarisation sont disposés sur un canal d'entrée du multiplexeur (41) de ladite liaison, et **en ce que** ledit second contrôleur (60) de polarisation, ledit émulateur (70) de retard de groupe différentiel et ledit dispositif (90) d'analyse sont disposés sur le canal (51) de sortie de la liaison associé audit canal (41) d'entrée.

7. Dispositif selon l'une quelconque des revendications 4 à 6, **caractérisé en ce que** ladite liaison WDM comprend au moins un OADM (100).

## Patentansprüche

1. Verfahren zum Messen der Differentialgruppenverzögerung τ₁ in einer faseroptischen Verbindung, **dadurch gekennzeichnet, dass** das Verfahren die Schritte aufweist, die in Folgendem bestehen:
- am Eingang der Verbindung, Erzeugen einer binären Signalsequenz mit einem Durchsatz D und Anwenden eines ersten Abtastens der Polarisationszustände auf das binäre Signal,
- am Verbindungsausgang, Anwenden eines zweiten Abtastens der Polarisationszustände auf das binäre Signal der ausgehenden Sequenz unabhängig von dem ersten Abtasten, Einführen einer zusätzlichen bekannten Differentialgruppenverzögerung τ₂, Variieren der zusätzlichen Differentialgruppenverzögerung bis zum Bestimmen der Gleichheit τ₁ + τ₂ = 1/D auf der Sequenz des resultierenden Signals und dem daraus Ableiten der gesuchten Differentialgruppenverzögerung τ₁.

2. Verfahren nach Anspruch 1, **dadurch gekennzeichnet, dass** der Schritt des Bestimmens der Gleichheit τ₁ + τ₂ = 1/D durchgeführt wird, indem ein Augendiagramm einer Sequenz des resultierenden Signals aufgezeichnet wird, wobei die Gleichheit durchgeführt wird, wenn das Diagramm ein dreistufiges Signal mit einer maximalen Intensität der mittleren Stufe aufweist.

3. Verfahren nach Anspruch 1, **dadurch gekennzeichnet, dass** der Schritt des Bestimmens der Gleichheit τ₁ + τ₂ = 1/D durchgeführt wird, indem ein Histogramm der Stufen des Augendiagramms des resultierenden Signals aufgezeichnet wird, wobei die Gleichheit durchgeführt wird, wenn das Histogramm 3 Schleifen aufweist und die mittlere Schleife eine maximale Amplitude erreicht.

4. Vorrichtung zum Messen der Differentialgruppenverzögerung τ₁ in einer faseroptischen Verbindung, **dadurch gekennzeichnet, dass** die Vorrichtung Folgendes aufweist:
- am Eingang der Verbindung, einen Generator (10) einer binären Signalsequenz mit einem Durchsatz D und einen ersten Polarisationscontroller (30), der geeignet ist, ein erstes Abtasten der Polarisationszustände, die auf das binäre Signal der eintreffenden Sequenz angewendet werden, durchzuführen,
- am Verbindungsausgang, einen zweiten Polarisationscontroller (60), der geeignet ist, ein zweites Abtasten der Polarisationszustände, die auf das Signal der ausgehenden Sequenz angewendet werden, unabhängig von der ersten Polarisationsabtastung durchzuführen, einen Emulator (70) der Differentialgruppenverzögerung, der geeignet ist, eine variable zusätzliche Differentialgruppenverzögerung τ₂ einzuführen, und eine Analysevorrichtung (90), die geeignet ist, die Gleichheit τ₁ + τ₂ = 1/D auf der Sequenz des resultierenden Signals nach dem Emulator (70) zu bestimmen.

5. Vorrichtung nach Anspruch 4, **dadurch gekennzeichnet, dass** die Analysevorrichtung (90) ein Histogrammgenerator ist, der geeignet ist, das Histogramm der Stufen einer Sequenz des resultierenden Signals bereitzustellen.

6. Vorrichtung nach einem der Ansprüche 4 und 5, **dadurch gekennzeichnet, dass** die Verbindung eine WDM-Verbindung ist, wobei der Generator (10) von Signalsequenzen und der erste Polarisationscontroller (30) auf einem Eingangskanal des Multiplexers (41) der Verbindung angeordnet sind, und dass der zweite Polarisationscontroller (60), der Emulator (70) der Differentialgruppenverzögerung und die Analysevorrichtung (90) auf dem Ausgangskanal (51) der Verbindung, der dem Eingangskanal (41) zugeordnet ist, angeordnet sind.

7. Vorrichtung nach einem der Ansprüche 4 bis 6, **dadurch gekennzeichnet, dass** die WDM-Verbindung mindestens einen OADM (100) aufweist.

## Claims

1. Method for measuring the differential group delay τ₁ in a fibre optic link, **characterized in that** said method comprises the steps consisting in:
- at the input of said link, generating a binary signal sequence at a rate D, and in applying to said binary signal a first scanning of the polarization states,
- at the output of the link, applying to the binary signal of the output sequence a second scanning of the polarization states, independently of said first scanning, in introducing an additional known differential group delay τ₂, in making said additional differential group delay vary until the equality τ₁+τ₂=1/D is determined on the resulting signal sequence and in deducing from this the differential group delay τ₁ sought.

2. Method according to Claim 1, **characterized in that** the step for determining the equality τ₁+τ₂=1/D is carried out by recording a histogram of the levels of the eye diagram of the resulting signal, said equality being achieved when said histogram exhibits a signal with 3 levels with a maximum intensity of the central level.

3. Method according to Claim 1, **characterized in that** the step for determining the equality τ₁+τ₂=1/D is carried out by recording a histogram of the levels of the eye diagram of the resulting signal, said equality being achieved when said histogram exhibits 3 lobes and when the central lobe reaches a maximum amplitude.

4. Device for measuring the differential group delay τ₁ in a fibre optic link, **characterized in that** said device comprises:
- the input of the link, a generator (10) of the binary signal sequence a rate D and a first polarization controller (30) capable of carrying out a first scanning of the polarization states applied to the binary signal of the binary sequence,
- the output of the link, a second polarization controller (60) capable of carrying out a second scanning of the polarization states applied to the signal of the output sequence independently of said first polarization scanning, a differential group delay emulator (70) capable of introducing an additional variable differential group delay τ₂, and an analysis device (90) capable of determining the equality τ₁+τ₂=1/D on the resulting signal sequence after the emulator (70).

5. Device according to Claim 4, **characterized in that** said analysis device (90) is a histogram generator designed to provide the histogram of the levels of a resulting signal sequence.

6. Device according to either one of Claims 4 and 5, **characterized in that**, said link being a WDM link, said signal sequence generator (10) and said first polarization controller (30) are disposed on an input channel of the multiplexer (41) of said link, and **in that** said second polarization controller (60), said differential group delay emulator (70) and said analysis device (90) are disposed on the output channel (51) of the link associated with the input channel (41).

7. Device according to any one of Claims 4 to 6, **characterized in that** said WDM link comprises least one OADM (100).
